# EUROPEAN PATENT SPECIFICATION

(11) **EP 4 587 617 B1**
(45) Date of publication and mention of the grant of the patent: **04.11.2026**
(21) Application number: 23765250.8
(22) Date of filing: 05.09.2023
(51) Int. Cl.: C25B 9/19, C25B 9/63

(54) **ELECTROLYSIS CELL WITH ARCHED SUPPORT MEMBERS**
ELEKTROLYSEZELLE MIT BOGENFÖRMIGEN STÜTZELEMENTEN
CELLULE D'ÉLECTROLYSE AVEC ÉLÉMENTS DE SUPPORT ARQUÉS

(30) Priority: 15.09.2022 EP 22195949
(43) Date of publication of application: 23.07.2025
(73) Proprietor: thyssenkrupp nucera AG & Co. KGaA, 44269 Dortmund (DE)
(72) Inventor: WALDECK, Sebastian, 58675 Hemer (DE); HILTROP, Dennis, 44139 Dortmund (DE)
(86) International application number: PCT/EP2023/074297
(87) International publication number: WO 2024/056462

(56) References cited:
- WO-A1-2017/217427
- JP-A- 2021 130 869
- US-A- 4 855 032
- US-A- 5 384 208
- US-A1- 2009 050 472
- US-A1- 2021 222 306

## Description

### Background of the invention

The invention relates to an electrolysis cell according to the preamble of claim 1.

Electrolysis cells for chlor-alkali and/or alkaline water electrolysis typically comprise two electrode chambers containing one electrode each. The electrode chambers are separated from one another by a sheet-like separator. The electrodes within each chamber are supported by a support structure on a back wall of the electrode chamber.

In the past, the electrodes used to be positioned with a gap to the separator ("finite-gap configuration") in order to prevent damages of the separator during assembly and to allow for the product gases to bubble up freely also on the separator side of the electrodes. However, for an increased efficiency of the cell the so-called "zero-gap configuration" has been developed in which the electrodes are in touching contact with the separator on both sides. In order to reduce the risk of damaging the separator during assembly and to provide for a homogeneous contact pressure, the support structure of at least one electrode usually contains at least one resilient member in an electrolysis cell of zero-gap design.

From the prior art, zero-gap electrolysis cells with resilient electrode support elements of differing designs are known.

WO 2017/217427 A1 describes an electrolytic cell including an elastic member disposed in the cathode chamber. The elastic member is constituted by a bonding part, a plurality of spring retaining parts and two spring rows provided on each spring retaining part. The bonding part is bonded to a flat panel-shaped electrolytic partition wall. The spring rows contact the cathode. Each spring row is constituted by a plurality of first flat spring-like bodies. Similar elastic members with flexible tongues supporting the electrodes are known from EP 1 865 092 A2, EP 1 900 851 A2 and EP 1 378 589 A1.

It is disadvantageous that the flexible tongues of the known elastic members are quite limited in the maximum surface pressure they can exert on the separators. If the maximum pressure is exceeded, the flexible tongues deform at their roots and surface pressure may become inhomogeneous. Moreover, the protruding tongues may entangle with the electrode's mesh material such that the tongues deform on opening the cell for maintenance and/or recoating of the electrodes. Thus, maintenance requires laborious refurbishment of the flexible tongues before the cell can be assembled again.

Another type of resilient support elements in an electrolytic cell is known from
US 2021/222 306 A1. The resilient support elements contain annular elements, the axis of which is oriented in the height direction of the electrolysis cell. The annular elements deform at least in part plastically during assembly of the cell and thus also require refurbishment during maintenance of the cell. Moreover, the resilient support elements are welded at least either to the electrode or to the back wall, which results in high assembly and refurbishment efforts.

### Brief Summary of Invention

The object of the invention is to provide an electrolysis cell with resilient support members for an electrode that is easy to assemble and reduce the manufacturing and refurbishment effort during maintenance.

This object is achieved by an electrolysis cell according to the features of claim 1.

Hereby, an electrolysis cell for chlor-alkali or alkaline water electrolysis is provided. The electrolysis cell comprises two cell elements that each define an electrode chamber by providing a back wall and sidewalls of the electrode chambers. The electrolysis further comprises an electrode accommodated in each of the electrode chambers and a sheet-like separator extending in a height direction and a width direction of the electrolysis cell. The separator is interposed in a joint between the two cell elements and provides a separating wall between the electrode chambers. The electrolysis cell comprises in addition a plurality of support members that support at least one of the electrodes on the respective back wall. The support members each comprise two support portions standing upright on the back wall and extending in the height direction of the electrolysis cell, and two foot portions that are attached to the respective support portion in an angled manner for a planar contact with the back wall. According to the invention, the support portions of the support members are connected to each other by an arched portion being arched outwardly towards the supported electrode and providing a resilient bearing surface for the supported electrode, wherein the bearing surface is enlarged upon inwards-directed deflections of the arched portion.

The support members according to the invention form an arc-spring. The support members thus are a single piece construction providing at the same time a static support component by the upright support portions as well as an elastic support component by the deflectable arched portion. The functions of support, current distribution and homogeneous contact pressure of the electrode are all provided by the support members.

Moreover, the fact that the bearing surface for the electrode is enlarged upon inwards-directed deflections of the arched portion has an advantageous effect for both, the supported electrode and the support member.

As the bearing surface enlarges during assembly of the cell e.g. by providing a contact pressure in the joint of the cell elements, the load acting between the electrode and the respective back wall is dissipated through the larger contact area of the enlarged bearing surface. Thus, the pressure is distributed over a larger part of the area of the electrode and results in an improved homogeneity of the contact pressure between electrode and separator.

On the other hand, due to the increasing bearing surface, the arched portion of the support member exhibits a progressive spring characteristic. The progressive spring characteristic of the arched portion has the effect that further deflections upon increasing loads are reduced, such that plastic deformations of the support members can be prevented reliably. Thereby the refurbishment effort of the support members during maintenance is reduced.

In preferred embodiments, the foot portions are attached to the back wall by a detachable mechanical connection. If the foot portions are fixed by detachable mechanical connections to the back wall, the support members can be mounted and replaced easily and individually.

Preferably, the foot portions are subdivided by indentations into latches that are engaged in pockets provided on the back wall. Even more preferred, the support members are fixed in a mounted position by a form-locked engagement of the latches in the pockets. This mounted position can be achieved, for example, by exploiting the elastic properties of the support member to deflect the foot portions during assembly, in order to bring the latches of both foot portions into engagement with the respective pockets on the back wall. The pockets can preferably be provided on the back wall by means of corrugated metal strips. The metal strips can be intermittently fixed to the back wall by spot welding, for example.

In further preferred embodiments, the indentations are continued into the respective support portion for a lateral suspension of the individual latches. With the indentations continuing into the support portions, the latches become individually deflectable in a lateral direction. Thereby, the mounting of the support members in the cell is simplified as the latches can be plugged into the pockets on a one-by-one basis.

Preferably, the resilient bearing surface comprises openings for passage of gas produced at the supported electrode. Thus, the gas produced at the electrode does not need to dissipate through the mesh-like structure of the electrode alone, but enters the portion of the electrode chamber behind the support members, which is filled with electrolyte during operation of the cell. In addition, the openings improve the supply of the electrode with fresh electrolyte. Both effects contribute to an improved efficiency of the cell. However, if the openings are chosen too large, the stability of the support member and mechanical resistance of the arched portion are weakened. Therefore, the opening ratio defined as the area of the openings divided by the complete bearing surface is preferably chosen within the range of 0.6 to 0.85, and more preferably within the range of 0.7 to 0.8.

In preferred embodiments, the openings are provided with bent rim portions facing away from the supported electrode. The bent rim portions enlarge the geometrical moment of inertia of the arched portions. Thus, the bent rim portions allow for a larger area of the openings by strengthening the supportive effect of the arched portions at the same time.

In some embodiments, the foot portions of laterally adjacent support members are arranged side-by-side on the back wall. Such an arrangement enlarges the contact area of the support members on the back wall and thus improves current distribution by the support members.

In alternative embodiments, the foot portions of laterally adjacent support members are arranged on top of each other on the back wall. This arrangement has the advantage that the gap between bearing surfaces of the laterally adjacent support members is reduced, such that the electrode is supported even more homogeneously over its complete area.

In certain preferred embodiments, the bearing surface extends laterally beyond the support portions at least to one side by means of an extension portion of the support member. The extension portion thus extends the arched portion on the side of the support portion that faces away from the arched portion. Extension portions of this kind may be used to reduce or even close the gap between the bearing surfaces of laterally adjacent support members.

Preferably, the arched portion has an arch height and the support portions have a supporting height, wherein the ratio of the arch height and the supporting height is within the range from 1:3 to 1:30, and more preferred in the range of 1:10 to 1:20, in an undeflected state of the arched portion. Thus, the larger part of the space between the back wall and the electrode is preferably bridged by the support portions, while the arch is comparatively flat. This cross-sectional form of the support member is preferred as it results in a wide bearing surface for the electrode and thus optimizes both, resilient support of the electrode and uniform current distribution.

Further advantages of the invention are described in the following with regard to the embodiments shown in the attached drawings.

### Brief Description of Drawings

- Fig. 1: shows schematically a cross-sectional view of an electrolysis cell according to the invention,
- Fig. 2A: shows schematically a first perspective view of the right-hand side cell element of Fig. 1 containing a plurality of support members mounted on the back wall,
- Fig. 2B: shows schematically a second close-up perspective view of the cell element of Fig. 2A ,
- Fig. 3: shows schematically a perspective view of a single support element according to the embodiment shown in Figs. 1, 2A and 2B,
- Figs. 4A and 4B: show schematically a cross-sectional view of the support element according to Fig. 3, in a load-free state and a loaded state, respectively,
- Figs 5A to 5E: show schematically in a cross-sectional view different configurations of support members according to the invention and their arrangement on the back wall of the cell,
- Fig. 6: shows schematically a perspective view of a support member according to another embodiment of the invention, and
- Fig. 7: shows schematically a cross-sectional view of the support member according to Fig. 6.

### Detailed Description of Invention

In the drawings same parts are consistently identified by the same reference signs and are therefore generally described and referred to only once.

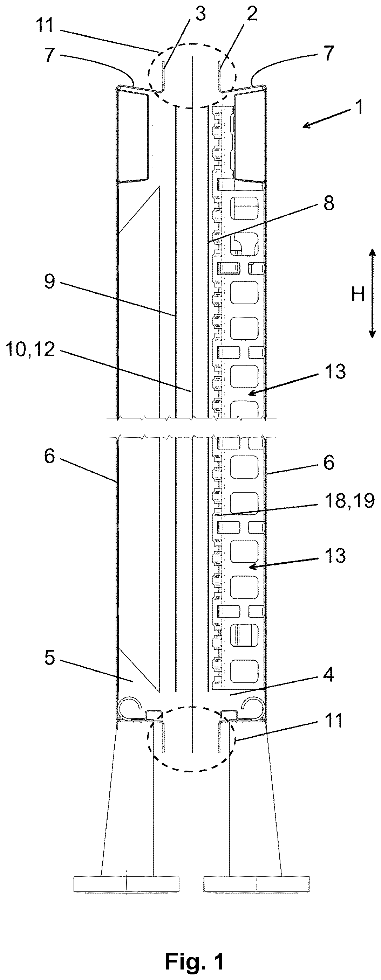

**Fig. 1** shows a cross-sectional view of an electrolysis cell 1 for chlor-alkali or alkaline water electrolysis according to the invention. The electrolysis cell 1 comprises two cell elements 2, 3, which each define an electrode chamber 4, 5 by providing a back wall 6 and sidewalls 7 of the electrode chambers 4, 5, and an electrode 8, 9 accommodated in each of the electrode chambers 4, 5.

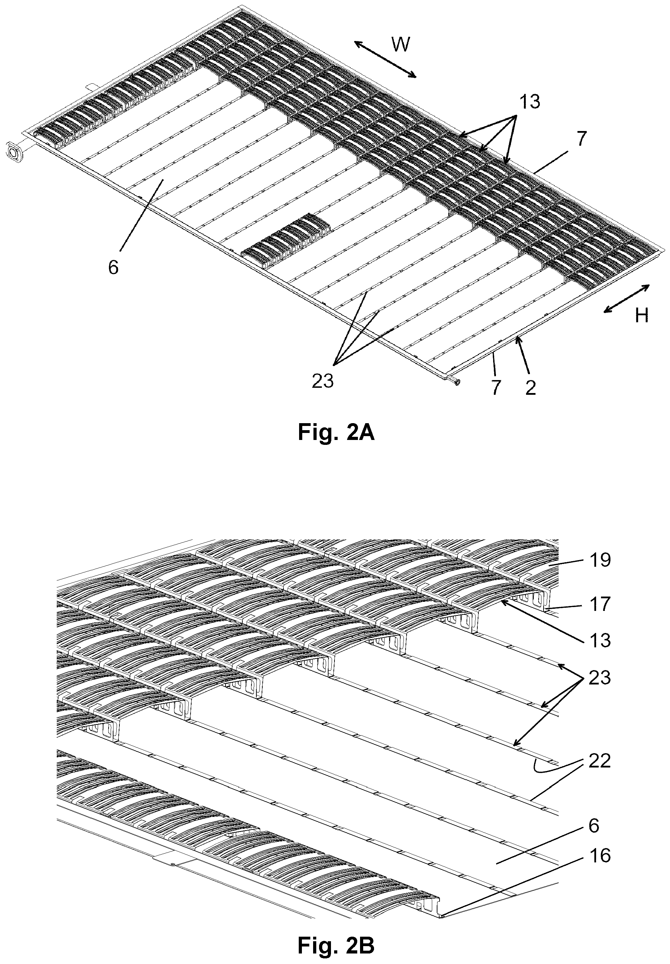

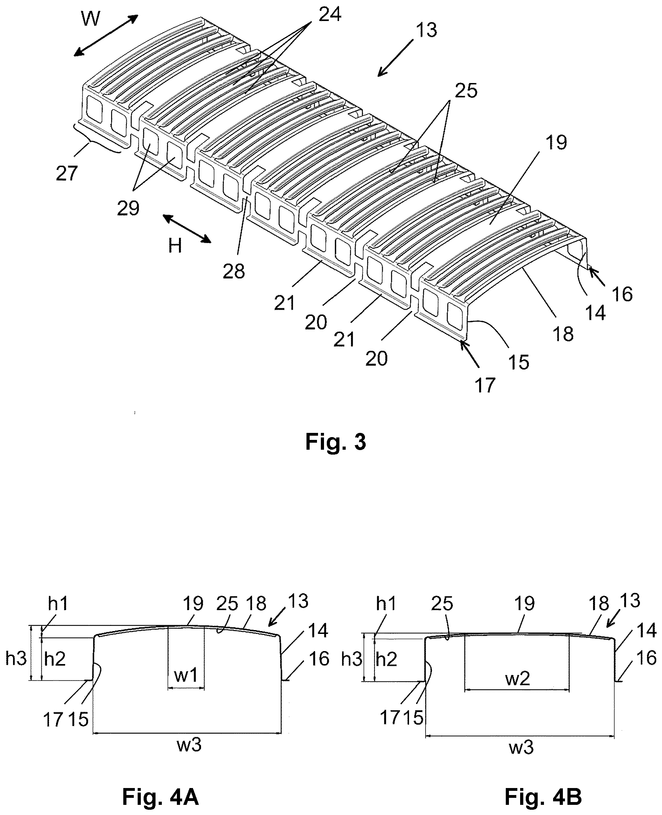

**Figs. 2A, 2B** and **Fig. 3** show additional details of the inner structure of the electrolysis cell 1 according to Fig. 1 in perspective views. The structure of the cell 1 will therefore be explained in the following in more detail with reference to Figs. 1 to 3.

The cell 1 further comprises a sheet-like separator 10 extending in a height direction H and a width direction W of the electrolysis cell 1. The separator 10 is interposed in a joint 11 between the two cell elements 2, 3 and provides a separating wall 12 between the electrode chambers 4, 5. Within the cell 1 a plurality of support members 13 supporting one of the electrodes 8 on the respective back wall 6 is provided. The support members 13 each comprise two support portions 14, 15 standing upright on the back wall 6 and extending in the height direction H of the electrolysis cell 1, and two foot portions 16, 17 attached to the respective support portion 14; 15 in an angled manner for a planar contact with the back wall 6. According to the invention, the support portions 14, 15 of the support members 13 are connected to each other by an arched portion 18. The arched portion 18 is arched outwardly towards the supported electrode 8 and provides a resilient bearing surface 19 for the supported electrode 8. Upon inwards-directed deflections of the arched portion 18 the bearing surface 19 is enlarged.

In operation, one of the electrodes 8, 9 acts as the anode and the other one as the cathode of the electrolysis. Since different chemical products are obtained at the anode (chlorine, oxygen) and the cathode (hydrogen), the electrode chambers 4, 5 may be designed differently. In particular, the harsher conditions typically prevail within the anode chamber due to the oxidative effect of the chlorine or oxygen produced there in chlor-alkali and alkaline water electrolysis, respectively. The resilient support members according to the invention can generally be used in both, the anode and/or the cathode chamber.

As can be best seen in Figs. 2A and 2B, the foot portions 16, 17 may be attached to the back wall 6 by a detachable mechanical connection. In particular, the foot portions 16, 17 can be subdivided by indentations 20 into latches 21 (cf. Fig. 3) that are engaged in pockets 22 provided on the back wall 6. The pockets 22 can be provided on the back wall 6 by means of corrugated metal strips 23 that are intermittently fixed to the back wall 6 by spot welding.

The structure of the support member 13 is explained in more detail with reference to Fig. 3. The support portions 14, 15 together with the arched portion 18 and the backwall 6 form a hollow channel in the height direction H of the cell for an unobstructed passage of electrolyte and/or gases produced at the supported electrode 8. Along the height direction H the support member 13 may be subdivided into a plurality of individual arches 27, e.g. seven arches 27 as shown in Fig. 3. Those individual arches are formed preferably by the indentations 20 being continued into the respective support portion 14, 15 and result in a lateral suspension of the individual latches 21 forming the foot portions of 16, 17 of the individual arches 27. The individual arches 27 may be connected to each other within the region of the support portions 14, 15 by bridges 28, as shown in Fig. 3. Alternatively, the indentations may continue up to the arched portion 18, such that the individual arches 27 are only connected to each other within the region of the arched portion 18.

Preferably, the resilient bearing surface 19 comprises openings 24 for passage of gas produced at the supported electrode 8. As depicted in Fig. 3, the openings 24 may be slit-shaped openings that preferably extend in the width direction W of the cell 1. It is preferred to provide a plurality of openings 24 within each individual arch 27.

The opening ratio of the openings 24 to the complete bearing surface 19 (including the openings 24) may be within the range 0.2 to 0.45, and more particularly within the range 0.25 to 0.35. As depicted in Fig. 3, the openings 24 are preferably provided with bent rim portions 25 that face away from the supported electrode 8.

The support portions 16, 17 may include cutouts 29. The cutouts 29 allow for an improved flow of electrolyte along the width direction W of the cell 1 and reduce the amount of material needed to build the support members 13.

The support members 13 are preferably made of a metallic material, in particular preferably made of nickel or titanium.

In **Fig. 4A** the support member 13 is shown in undeflected, load-free state. The arched portion 18 has an arch height h1 and the support portions 14, 15 have a supporting height h2. In the undeflected state, the ratio of the arch height h1 and the supporting height h2 is within the range from 1:3 to 1:30, and in particular within the range 1:3 to 1:6. The total height of the support member is denoted h3.

If an electrode is put atop the arched portion 18 in the load-free undeflected state, the resilient bearing surface 19 is concentrated to the upmost part of the arch and has a load-free supporting width w1. In **Fig. 4B****,** the support member 13 is shown in a state under load. Upon the load-induced inwards-directed deflection of the arched portion 18, the bearing surface 19 is increased, resulting in an increased supporting width w2 under load. The supporting width w2 under load is preferably at least 50 %, and even more preferred at least 75 % of the total width w3 of the arched portion 18. The supporting width w2 under load may reach up to 100% of the total width w3 of the arched portion 18.

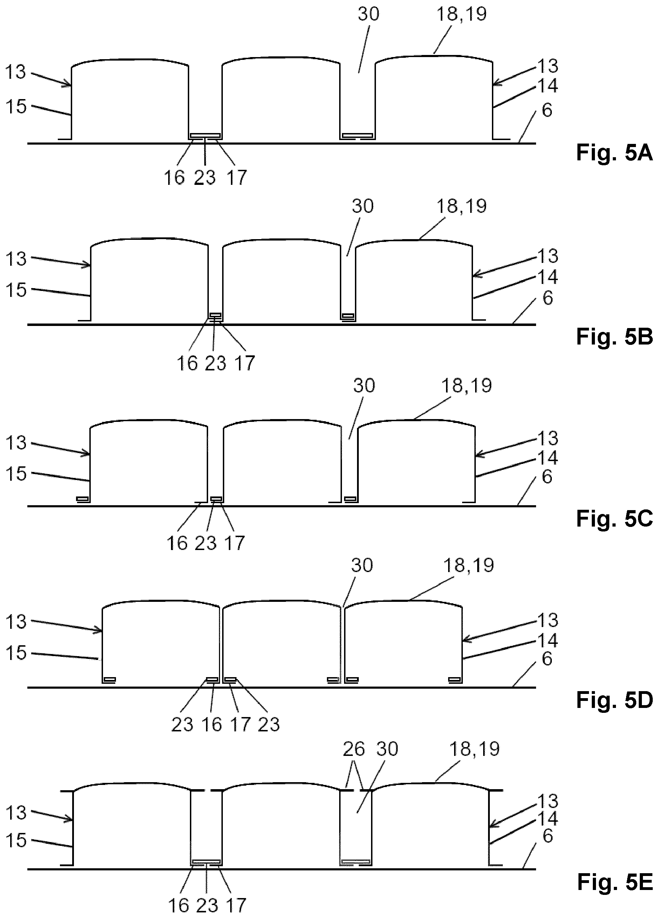

**Figs. 5A to 5E** show in a cross-sectional view five variants of the arrangement of several laterally adjacent support members 13 on the back wall 6 of an electrolytic cell according to the invention.

**Fig. 5A** shows support members 13 having foot portions 16, 17 that are bent outwards. The foot portions 16, 17 are introduced in pockets formed beneath a metal strip 23 from both sides in a side-by-side arrangement. This arrangement results in a large contact area with the back wall 6, but also leads to a relatively large unsupported gap 30 of the electrode between the arched portions 18 of adjacent support members 13.

In order to reduce the gap 30, a configuration as shown in in **Fig. 5B** can be used, in which the foot portions 17, 16 of laterally adjacent support members 13 are arranged on top of each other on the back wall 6. Thus, the width of the stripes 23 and the width of the gap 30 is reduced.

An alternative configuration is shown in **Fig. 5C****.** If the foot portions 16, 17 are bent to the same side, the gap 30 between the arched portions 18 of adjacent support members 13 can be reduced to the width of one foot portion 16; 17. The foot portions 16; 17 are introduced in the pockets beneath the metal stripes 23 from one side. Either both or only one of the foot portions 16, 17 as shown in Fig. 5C may fixed to the back wall 6.

**Fig. 5D** shows a configuration with a minimal gap 30. The foot portions 16, 17 are both bent inwards, such that the support portions 14, 15 of adjacent support members 13 are immediately adjacent to each other. This configuration has a comparatively high assembly effort since twice the number of metal stripes 23 are required.

Finally, **Fig 5E** shows a configuration in which the bearing surface 19 extends laterally beyond the support portions 14, 15 to both sides by means of extension portions 26 of the support member 13. Thus, the extension portions 26 are configured to support the electrode in the gap 30 between the adjacent support members 13.

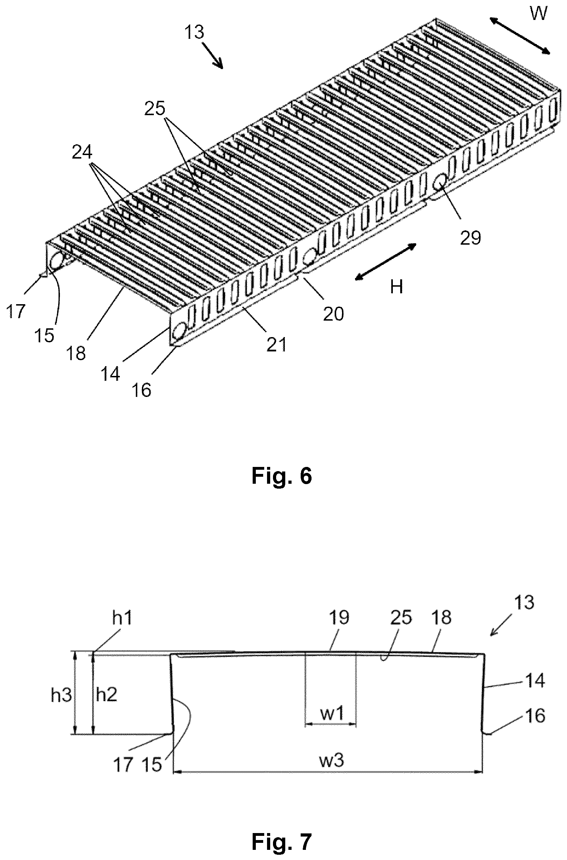

**Figs. 6 and 7** show another embodiment of a support member 13 according to the invention. Rather than being subdivided into a plurality of individual arches, the bearing surface 19 in Fig. 6 is configured as a regular grating. The openings 24 are thus arranged at regular intervals throughout the whole bearing surface 19.This has the positive effect that gas discharge and electrolyte exchange through the bearing surface's 19 openings 24 is homogenized throughout the electrode 8. Further, the surface pressure on the bearing surface 19 is equalized by the regular structure.

Another difference compared to the embodiment of Fig. 3 is that the opening ratio of the openings 24 to the complete bearing surface 19 is larger, namely within the range 0.6 to 0.85, in particular within the range 0.7 to 0.8. This rather large opening ratio also enhances the exchange of electrolyte and gas through the bearing surface 19, while providing still sufficient support for the electrode 8.

The embodiment of Figs. 6 and 7 is further characterized by a particularly flat arched portion 18. The ratio of the arch height h1 and the supporting height h2 (cf. Fig. 7) is within the range from 1:3 to 1:30, and in particular within the range of 1:10 to 1:20 in an undeflected state of the arched portion 18. It has been found that a rather flat arched portion 18 helps to provide an equalized surface pressure in the width direction W of the support element.

In all other respects, the description of the embodiment shown in Figs. 1 to 4 also applies to the embodiment shown in Figs. 6 and 7.

### List of Reference Signs

- 1: electrolysis cell
- 2, 3: cell elements
- 4, 5: electrode chamber
- 6: back wall
- 7: sidewall
- 8, 9: electrodes
- 10: sheet-like separator
- 11: joint
- 12: separating wall
- 13: support member
- 14, 15: support portions
- 16, 17: foot portions
- 18: arched portion
- 19: resilient bearing surface
- 20: indentation
- 21: latch
- 22: pocket
- 23: metal strip
- 24: opening
- 25: rim portion
- 26: extension portion
- 27: arch
- 28: bridge
- 29: cutout
- 30: gap

- H: height direction
- h1: arch height
- h2: supporting height
- h3: total height of support member
- W: width direction
- w1: load-free supporting width
- w2: supporting width under load
- w3: width of arched portion

## Claims

1. Electrolysis cell for chlor-alkali or alkaline water electrolysis comprising
two cell elements (2, 3) each defining an electrode chamber (4, 5) by providing a back wall (6) and sidewalls (7) of the electrode chambers (4, 5),
an electrode (8, 9) accommodated in each of the electrode chambers (4, 5),
a sheet-like separator (10) extending in a height direction (H) and a width direction (W) of the electrolysis cell (1), the separator (10) being interposed in a joint (11) between the two cell elements (2, 3) and providing a separating wall (12) between the electrode chambers (4, 5), and
a plurality of support members (13) supporting at least one (8) of the electrodes (8, 9) on the respective back wall (6), wherein the support members (13) each comprise
two support portions (14, 15) standing upright on the back wall (6) and extending in the height direction (H) of the electrolysis cell (1), and
two foot portions (16, 17) attached to the respective support portion (14; 15) in an angled manner for a planar contact with the back wall (6),
**characterized in that**
the support portions (14, 15) of the support members (13) are connected to each other by an arched portion (18) being arched outwardly towards the supported electrode (8) and providing a resilient bearing surface (19) for the supported electrode (8), wherein the bearing surface (19) is enlarged upon inwards-directed deflections of the arched portion (18).

2. Electrolysis cell according to claim 1, **characterized in that** the foot portions (16, 17) are attached to the back wall (6) by a detachable mechanical connection.

3. Electrolysis cell according to claim 1 or 2, **characterized in that** the foot portions (16, 17) are subdivided by indentations (20) into latches (21) that are engaged in pockets (22) provided on the back wall (6).

4. Electrolysis cell according to claim 3, **characterized in that** the pockets (22) are provided on the back wall (6) by means of corrugated metal strips (23) that are intermittently fixed to the back wall (6) by spot welding.

5. Electrolysis cell according to claim 3 or 4, **characterized in that** the indentations (20) are continued into the respective support portion (14, 15) for a lateral suspension of the individual latches (21).

6. Electrolysis cell according to any one of the claims 1 to 5, **characterized in that** the resilient bearing surface (19) comprises openings (24) for passage of gas produced at the supported electrode (8).

7. Electrolysis cell according to claim 6, **characterized in that** the opening ratio of the openings (24) to the complete bearing surface (19) is within the range 0.6 to 0.85.

8. Electrolysis cell according to claim 7, **characterized in that** the opening ratio of the openings (24) to the complete bearing surface (19) is within the range 0.7 to 0.8.

9. Electrolysis cell according to any one of the claims 6 to 8, **characterized in that** the openings (24) are provided with bent rim portions (25) facing away from the supported electrode (8).

10. Electrolysis cell according to any one of the claims 1 to 9, **characterized in that** the foot portions (17, 16) of laterally adjacent support members (13) are arranged on top of each other on the back wall (6).

11. Electrolysis cell according to any one of the claims 1 to 10, **characterized in that** the bearing surface (19) extends laterally beyond the support portions (14, 15) at least to one side by means of an extension portion (26) of the support member (13).

12. Electrolysis cell according to any one of the claims 1 to 11, **characterized in that** the arched portion (18) has an arch height (h1) and the support portions (14, 15) have a supporting height (h2), wherein the ratio of the arch height (h1) and the supporting height (h2) is within the range from 1:3 to 1:30 in an undeflected state of the arched portion (18).

13. Electrolysis cell according to claim 12, **characterized in that** the ratio of the arch height (h1) and the supporting height (h2) is within the range from 1:10 to 1:20 in an undeflected state of the arched portion (18).

## Patentansprüche

1. Elektrolysezelle für Chlor-Alkali-Elektrolyse oder alkalische Wasserelektrolyse, umfassend
zwei Zellenelemente (2, 3), die jeweils eine Elektrodenkammer (4, 5) definieren, indem sie eine Rückwand (6) und Seitenwände (7) der Elektrodenkammern (4, 5) bereitstellen,
eine Elektrode (8, 9), die in jeder der Elektrodenkammern (4, 5) aufgenommen ist,
einen flächigen Separator (10), der sich in einer Höhenrichtung (H) und einer Breitenrichtung (W) der Elektrolysezelle (1) erstreckt, wobei der Separator (10) in einer Verbindung (11) zwischen den zwei Zellenelementen (2, 3) angeordnet ist und eine Trennwand (12) zwischen den Elektrodenkammern (4, 5) bereitstellt, und
eine Mehrzahl von Stützelementen (13), die mindestens eine (8) der Elektroden (8, 9) auf der jeweiligen Rückwand (6) stützen, wobei die Stützelemente (13) jeweils umfassen
zwei Stützabschnitte (14, 15), die aufrecht auf der Rückwand (6) stehen und sich in der Höhenrichtung (H) der Elektrolysezelle (1) erstrecken, und
zwei Fußabschnitte (16, 17), die in abgewinkelter Weise an dem jeweiligen Stützabschnitt (14; 15) für einen flächigen Kontakt mit der Rückwand (6) befestigt sind,
**dadurch gekennzeichnet, dass**
die Stützabschnitte (14, 15) der Stützelemente (13) durch einen bogenförmigen Abschnitt (18) miteinander verbunden sind, der nach außen in Richtung der gestützten Elektrode (8) gewölbt ist und eine elastische Auflagefläche (19) für die gestützte Elektrode (8) bereitstellt, wobei die Auflagefläche (19) bei nach innen gerichteten Durchbiegungen des bogenförmigen Abschnitts (18) vergrößert wird.

2. Elektrolysezelle nach Anspruch 1, **dadurch gekennzeichnet, dass** die Fußabschnitte (16, 17) durch eine lösbare mechanische Verbindung an der Rückwand (6) befestigt sind.

3. Elektrolysezelle nach Anspruch 1 oder 2, **dadurch gekennzeichnet, dass** die Fußabschnitte (16, 17) durch Ausnehmungen (20) in Rastzungen (21) unterteilt sind, die in an der Rückwand (6) vorgesehene Taschen (22) eingreifen.

4. Elektrolysezelle nach Anspruch 3, **dadurch gekennzeichnet, dass** die Taschen (22) an der Rückwand (6) mittels gewellter Metallstreifen (23) bereitgestellt sind, die abschnittsweise durch Punktschweißen an der Rückwand (6) befestigt sind.

5. Elektrolysezelle nach Anspruch 3 oder 4, **dadurch gekennzeichnet, dass** die Ausnehmungen (20) in den jeweiligen Stützabschnitt (14, 15) fortgesetzt sind, um eine seitliche Federung der einzelnen Rastzungen (21) bereitzustellen.

6. Elektrolysezelle nach einem der Ansprüche 1 bis 5, **dadurch gekennzeichnet, dass** die elastische Auflagefläche (19) Öffnungen (24) für den Durchtritt des an der gestützten Elektrode (8) erzeugten Gases umfasst.

7. Elektrolysezelle nach Anspruch 6, **dadurch gekennzeichnet, dass** das Öffnungsverhältnis der Öffnungen (24) zur gesamten Auflagefläche (19) im Bereich von 0,6 bis 0,85 liegt.

8. Elektrolysezelle nach Anspruch 7, **dadurch gekennzeichnet, dass** das Öffnungsverhältnis der Öffnungen (24) zur gesamten Auflagefläche (19) im Bereich von 0,7 bis 0,8 liegt.

9. Elektrolysezelle nach einem der Ansprüche 6 bis 8, **dadurch gekennzeichnet, dass** die Öffnungen (24) mit umgebogenen Randabschnitten (25) versehen sind, die von der gestützten Elektrode (8) weg weisen.

10. Elektrolysezelle nach einem der Ansprüche 1 bis 9, **dadurch gekennzeichnet, dass** die Fußabschnitte (17, 16) seitlich benachbarter Stützelemente (13) auf der Rückwand (6) übereinander angeordnet sind.

11. Elektrolysezelle nach einem der Ansprüche 1 bis 10, **dadurch gekennzeichnet, dass** sich die Auflagefläche (19) seitlich über die Stützabschnitte (14, 15) hinaus mindestens zu einer Seite mittels eines Erweiterungsabschnitts (26) des Stützelements (13) erstreckt.

12. Elektrolysezelle nach einem der Ansprüche 1 bis 11, **dadurch gekennzeichnet, dass** der bogenförmige Abschnitt (18) eine Bogenhöhe (h1) aufweist und die Stützabschnitte (14, 15) eine Stützhöhe (h2) aufweisen, wobei das Verhältnis der Bogenhöhe (h1) zur Stützhöhe (h2) im Bereich von 1:3 bis 1:30 in einem nicht durchgebogenen Zustand des bogenförmigen Abschnitts (18) liegt.

13. Elektrolysezelle nach Anspruch 12, **dadurch gekennzeichnet, dass** das Verhältnis der Bogenhöhe (h1) zur Stützhöhe (h2) im Bereich von 1:10 bis 1:20 in einem nicht durchgebogenen Zustand des bogenförmigen Abschnitts (18) liegt.

## Revendications

1. Cellule d'électrolyse pour l'électrolyse chlore-alcali ou l'électrolyse alcaline de l'eau comprenant
deux éléments de cellule (2, 3) définissant chacun une chambre d'électrode (4, 5) en fournissant une paroi arrière (6) et des parois latérales (7) des chambres d'électrode (4, 5),
une électrode (8, 9) logée dans chacune des chambres d'électrode (4, 5),
un séparateur en forme de feuille (10) s'étendant dans une direction de hauteur (H) et une direction de largeur (W) de la cellule d'électrolyse (1), le séparateur (10) étant interposé dans un joint (11) entre les deux éléments de cellule (2, 3) et fournissant une paroi de séparation (12) entre les chambres d'électrode (4, 5), et
une pluralité d'éléments de support (13) supportant au moins une (8) des électrodes (8, 9) sur la paroi arrière (6) respective, les éléments de support (13) comprenant chacun
deux parties de support (14, 15) se tenant verticalement sur la paroi arrière (6) et s'étendant dans la direction de hauteur (H) de la cellule d'électrolyse (1), et
deux parties de pied (16, 17) fixées à la partie de support respective (14; 15) de manière inclinée pour un contact plan avec la paroi arrière (6),
**caractérisée en ce que**
les parties de support (14, 15) des éléments de support (13) sont reliées l'une à l'autre par une partie arquée (18) étant arquée vers l'extérieur en direction de l'électrode supportée (8) et fournissant une surface d'appui élastique (19) pour l'électrode supportée (8), la surface d'appui (19) étant agrandie lors de déflexions dirigées vers l'intérieur de la partie arquée (18).

2. Cellule d'électrolyse selon la revendication 1, **caractérisée en ce que** les parties de pied (16, 17) sont fixées à la paroi arrière (6) par une liaison mécanique détachable.

3. Cellule d'électrolyse selon la revendication 1 ou 2, **caractérisée en ce que** les parties de pied (16, 17) sont subdivisées par des encoches (20) en languettes d'encliquetage (21) qui sont engagées dans des logements (22) prévus sur la paroi arrière (6).

4. Cellule d'électrolyse selon la revendication 3, **caractérisée en ce que** les logements (22) sont prévus sur la paroi arrière (6) au moyen de bandes métalliques ondulées (23) qui sont fixées de manière intermittente à la paroi arrière (6) par soudage par points.

5. Cellule d'électrolyse selon la revendication 3 ou 4, **caractérisée en ce que** les encoches (20) se prolongent dans la partie de support respective (14, 15) pour une suspension latérale des languettes d'encliquetage individuelles (21).

6. Cellule d'électrolyse selon l'une quelconque des revendications 1 à 5, **caractérisée en ce que** la surface d'appui élastique (19) comprend des ouvertures (24) pour le passage du gaz produit à l'électrode supportée (8).

7. Cellule d'électrolyse selon la revendication 6, **caractérisée en ce que** le rapport d'ouverture des ouvertures (24) par rapport à la surface d'appui complète (19) est compris dans la plage de 0,6 à 0,85.

8. Cellule d'électrolyse selon la revendication 7, **caractérisée en ce que** le rapport d'ouverture des ouvertures (24) par rapport à la surface d'appui complète (19) est compris dans la plage de 0,7 à 0,8.

9. Cellule d'électrolyse selon l'une quelconque des revendications 6 à 8, **caractérisée en ce que** les ouvertures (24) sont pourvues de parties de bord repliées (25) faisant face à l'opposé de l'électrode supportée (8).

10. Cellule d'électrolyse selon l'une quelconque des revendications 1 à 9, **caractérisée en ce que** les parties de pied (17, 16) d'éléments de support (13) latéralement adjacents sont disposées les unes sur les autres sur la paroi arrière (6).

11. Cellule d'électrolyse selon l'une quelconque des revendications 1 à 10, **caractérisée en ce que** la surface d'appui (19) s'étend latéralement au-delà des parties de support (14, 15) au moins d'un côté au moyen d'une partie d'extension (26) de l'élément de support (13).

12. Cellule d'électrolyse selon l'une quelconque des revendications 1 à 11, **caractérisée en ce que** la partie arquée (18) présente une hauteur d'arche (h1) et les parties de support (14, 15) présentent une hauteur de support (h2), le rapport entre la hauteur d'arche (h1) et la hauteur de support (h2) étant compris dans la plage de 1:3 à 1:30 dans un état non défléchi de la partie arquée (18).

13. Cellule d'électrolyse selon la revendication 12, **caractérisée en ce que** le rapport entre la hauteur d'arche (h1) et la hauteur de support (h2) est compris dans la plage de 1:10 à 1:20 dans un état non défléchi de la partie arquée (18).
